# EUROPÄISCHE PATENTSCHRIFT

(11) **EP 0 418 989 B1**
(45) Veröffentlichungstag und Bekanntmachung des Hinweises auf die Patenterteilung: **27.07.1994**
(21) Anmeldenummer: 90250234.3
(22) Anmeldetag: 13.09.1990
(51) Int. Cl.: G01V 9/04

(54) **Lichtschranke**
Light barrier
Barrière de lumière

(30) Priorität: 16.09.1989 DE 3931038
(43) Veröffentlichungstag der Anmeldung: 27.03.1991
(73) Patentinhaber: Ottleben, Bernd, 31162 Bad Salzdetfurth (DE)
(72) Erfinder: Ottleben, Bernd, 31162 Bad Salzdetfurth (DE)
(74) Vertreter: Lins, Edgar, Dipl.-Phys. Dr.jur.

(56) Entgegenhaltungen:
- PATENT ABSTRACTS OF JAPAN, vol. 8, no. 75 (P-266)(1512) 7. April 1984; & JP-A-58 221 181
- ELEKTRONIK Bd. 34, Nr. 1, 11. Januar 1985, München, DE, Seite 68, J. Donhauser: "Störsichere Wechsellicht-Schranke"
- IBM TECHNICAL DISCLOSURE BULLETIN, Bd. 20, Nr. 11B, April 1978, New York, US, Seiten 4744-4747, J. A. Beavers et al: "Self-Adjusting Optical Sense Amplifier"
- KONSTRUKTION & ELEKTRONIK, Nr. 18, 10. Mai 1989, München, DE,Seite 14: "Lichtschranke ignoriert Verschmutzungen"

## Beschreibung

Die Erfindung betrifft eine Lichtschranke mit einem optischen Sender zur Aussendung von Lichtimpulsen, einem optischen Empfänger zum Empfang der Lichtimpulse, einer Ansteuerschaltung für den optischen Sender mit einer Einstellvorrichtung für die Ausgangsleistung des optischen Senders, einer Erkennungsschaltung für die empfangenen Lichtimpulse mit einem Generator für ein der Intensität der empfangenen Lichtimpulse proportionales Indikationssignal und mit einer Anzeige für eine zu geringe empfangene Intensität der Lichtimpulse.

Derartige Lichtschranken sind bekannt. Für ihre Ansteuerung und für die Auslösung eines durch die Lichtschranke gesteuerten Schaltvorganges wird regelmäßig ein integrierter PLL-Schaltkreis verwendet, der einerseits den Takt für die vom Lichtsender ausgestrahlten Lichtimpulse produziert, andererseits die empfangenen Lichtimpulse mit den erzeugten Lichtimpulsen hinsichtlich der Frequenz und Phase vergleicht. Wird ein dem ausgesandten Impulssignal entsprechendes Signal nicht empfangen, wird ein Schaltsignal erzeugt, beispielsweise ein Relais umgeschaltet, um die durch die Lichtschranke auszulösenden Vorgänge zu initiieren. An einem Ausgang dieses integrierten Schaltkreises (IC) steht ein Gleichspannungssignal an, das der Intensität der empfangenen Lichtimpulse proportional ist. Dieses Gleichspannungssignal wird bei bekannten Lichtschranken dazu verwendet, eine geringe Intensität der empfangenen Lichtsignale anzuzeigen, die eine sichere Auswertung der empfangenen Signale gefährdet und regelmäßig auf eine Verschmutzung des optischen Senders bwz. Empfängers zurückzuführen ist.

Das hierdurch bewirkte Aufleuchten beispielsweise einer roten Leuchtdiode gibt dem Benutzer der Lichtschranke den Hinweis, daß eine neue Einstellung vorgenommen werden muß, regelmäßig durch eine Erhöhung des Verstärkungsfaktors des Eingangsverstärkers für die empfangenen Lichtimpulse. Es ist aber auch bekannt, die Ausgangsleistung des optischen Senders zu erhöhen, um eine höhere Empfangsleistung bei den empfangenen Lichtimpulsen zu erzielen. Die Nachstellung wird aufgrund des Alarmsignals manuell vorgenommen.

Aus der Zeitschrift "Konstruktion und Elektronik" vom 10.05.1989, Seite 14, ist eine Lichtschranke bekannt, bei der das Absinken des Signalpegels am Empfänger durch eine automatische Anhebung des Verstärkungsfaktors kompensiert wird. Wegen der damit verbundenen Verringerung des Signal-Rausch-Verhältnisses ist die Funktionssicherheit bei einer stärkeren Verschmutzung nicht mehr gewährleistet.

In der DE 31 24 464 A1 ist eine Lichtschranke beschrieben, die zum Zählen von Banknoten vorgesehen ist. Die Banknote läuft durch die Anordnung eines optischen Senders und eines optischen Empfängers hindurch. Zu Beginn des Zählvorganges wird die Vorrichtung eingeschaltet. Dabei wird der optische Sender so gesteuert, daß er eine maximale Intensität ausstrahlt. In Abhängigkeit von dem durch den optischen Empfänger empfangenen Signal wird die Intensität des optischen Senders schrittweise zurückgenommen, bis eine vorgegebene Empfangsintensität am optischen Empfänger erreicht wird. Die Sendeleistung des optischen Senders wird somit nach dem Kriterium der empfangenen Lichtleistung einstellt. Da der optische Sender mit einer Gleichspannung angesteuert wird, ist die Anordnung für normale Lichtschranken wegen ihrer Störanfälligkeit nicht geeignet. Eine brauchbare Funktion ergibt sich nur aufgrund des geringen Abstandes zwischen optischem Sender und optischem Empfänger und der damit verbundenen geringen Störeinflüsse.

Aus der DE 37 33 256 A1 ist es bekannt, die mit der manuellen Einstellung der Empfindlichkeit einer Auswertungsschaltung für das von einem Fototransistor empfangene Licht einer Glühlampe den durch die Glühlampe fließenden Konstantstrom zu verändern. Die Lichtschranke ist für eine Nähmaschinensteuerung vorgesehen, bei der Stoff durchstrahlt wird. Bei einem dünnen Stoff wird die volle Lichtleistung der Glühlampe nicht benötigt, so daß eine Reduzierung der Lichtleistung durch eine Herabsetzung des durch die Glühlampe fließenden Stroms möglich ist, so daß die Lebensdauer der Glühlampe erhöht wird.

Beispielsweise aus der DE 35 41 002 A1 ist es grundsätzlich bekannt, eine Lichtquelle, beispielsweise eine Laser-Lichtquelle, in ihrer Ausgangsleistung konstant zu halten, indem ein Teil des Lichtstroms gemessen und mit einem Vergleichswert verglichen wird.

Der Erfindung liegt die Problemstellung zugrunde, eine Lichtschranke mit den eingangs erwähnten Merkmalen so auszubilden, daß eine automatische Kompensation von Dejustierungen oder Verschmutzungen regelmäßig ohne Beeinträchtigung der Funktionssicherheit möglich ist.

Zur Lösung dieses Problems ist die Lichtschranke mit dem eingangs erwähnten Merkmalen gekennzeichnet durch
- einen Komparator, der das Indikationssignal mit einem vorgegebenen Sollwert vergleicht und in Abhängigkeit von dem Vergleich einen Schaltvorgang auslöst,
- einen Signalspeicher, dessen Signalwert in Abhängigkeit von dem Schaltvorgang durch den ersten Komparator zunimmt oder abnimmt, wenn der Signalspeicher mit dem geschalteten Teil in Verbindung steht, und unverändert bleibt, wenn die Verbindung unterbrochen ist,
- einen zweiten Komparator, der das Indikationssignal mit einem in Richtung geringerer Intensität der empfangenen Lichtimpulse von dem Sollwert verschiedenen Schwellwert vergleicht und ein Schaltsignal erzeugt,
- eine zwischen Signalspeicher und dem durch den ersten Komparator geschalteten Teil eingeschaltete Schaltstufe, die in Abhängigkeit vom Schaltsignal des zweiten Komparators die Verbindung des Signalspeichers mit dem geschalteten Teil unterbricht und
- eine an den Signalspeicher angeschlossene Steuerstufe zur Einstellung der Sendeleistung des Lichtsenders in Abhängigkeit von dem momentanen Signalwert des Signalspeichers.

Bei der erfindungsgemäßen Lichtschranke wird die Ausgangsleistung des Lichtsenders so geregelt, daß die empfangene Lichtleistung konstant bleibt. Dadurch wird erstmalig sichergestellt, daß die Lichtschranke immer die gleiche "Durchdringungsleistung" aufweist. Dadurch wird beispielsweise sichergestellt, daß die Lichtschranke nicht im Laufe der Zeit auf teildurchsichtige Gegenstände reagiert, auf die sie bei der Inbetriebnahme nicht reagiert hatte. Die erfindungsgemäße Ausbildung der Lichtschranke stellt weiter sicher, daß die eingestellte Senderleistung des Lichtsenders auch dann sofort wieder vorliegt, wenn die Lichtschranke für eine längere Zeit unterbrochen gewesen ist. Für diesen Fall wird nämlich der Regelmechanismus, der über den ersten Komparator ausgeübt wird, durch den zweiten Komparator abgeschaltet. Durch den zweiten Komparator und die an ihn angeschlossene Schaltstufe wird sichergestellt, daß der Signalspeicher seinen Signalwert, der für die Steuerung der Sendeleistung maßgebend ist, nicht verändert.

Die Steuerung der Sendeleistung kann dadurch erfolgen, daß die Steuerstufe die Amplitude der Lichtimpulse in Abhängigkeit von dem Signalwert des Signalspeichers verändert. Dabei bleibt das Tastverhältnis der Lichtimpulse unverändert. Diese Ausbildung der Steuerstufe ermöglicht einen weiten Regelbereich.

In einer alternativen Ausführungsform verändert die Steuerstufe das Tastverhältnis der Lichtimpulse in Abhängigkeit von dem Signalwert des Signalspeichers. In diesem Fall bleibt die Amplitude unverändert. Hierbei ist eine sehr feine Regelung möglich, allerdings ist der einstellbare Regelbereich begrenzt.

Der Signalspeicher kann in einer einfachen Ausführungsform der Erfindung ein Kondensator sein, der von dem durch den vom ersten Komparator ausgelösten Schaltvorgang auf- und entladbar ist. Dies kann in einfacher Weise dadurch realisiert werden, daß der erste Komparator die nicht mit einer Spannungsquelle verbundene Platte des Kondensators durch den Schaltvorgang auf Masse oder auf das Potential der Spannungsquelle legt, wobei die aufgeladene Platte des Kondensators auch direkt mit dem Ausgang des Komparators verbunden sein kann, wenn dieser durch einen Operationsverstärker gebildet ist, der üblicherweise am Ausgang in Abhängigkeit von dem durchgeführten Vergleich ein hohes oder ein Massepotential aufweist.

Vorzugsweise sind die Schaltschwellen der beiden Komparatoren durch Potentiometer einstellbar, so daß der Sollwert, aber auch die "Durchdringung" durch das System einstellbar ist. Vorzugsweise ist an den mit dem zweiten Komparator verbundenen Abgriff des ersten Potentiometers das zweite Potentiometer angeschlossen, dessen Abgriff mit dem ersten Komparator verbunden ist. Die beiden Potentiometer sind somit für den ersten Komparator in Serie geschaltet. Über sie gelangen vorzugsweise die Referenzspannungen an die betreffenden Eingänge der Komparatoren.

Die Erfindung soll im folgenden anhand von in der Zeichnung dargestellten Ausführungsbeispielen näher erläutert werden. Es zeigen:
- Figur 1 -: ein Blockschaltbild für die Regelung einer Lichtschranke mit einer Amplitudenregelstufe
- Figur 2 -: ein Blockschaltbild für eine Regelung einer Lichtschranke mit einer Regelstufe für das Tastverhältnis der Lichtimpulse.

Die Terminologie "Lichtschranke" und "Lichtimpulse" erfaßt üblicherweise auch solche Anordnungen, die mit elektromagnetischen Wellen arbeiten, die nicht im sichtbaren Bereich liegen. Von der vorliegenden Erfindung sollen daher auch solche Anordnungen erfaßt sein, bei denen Infrarotwellen oder elektromagnetische Wellen im Ultravioletten verwendet werden.

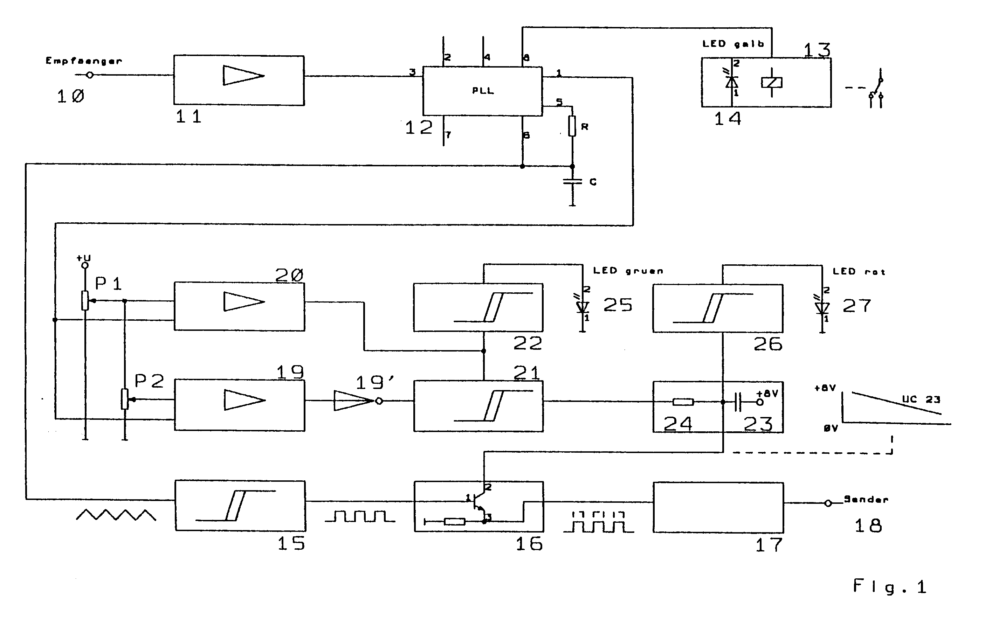

In der in Figur 1 dargestellten Anordnung werden die ausgesandten Lichtwellen (in Form von Infrarotwellen) von einem für den Infrarot-Bereich ausgelegten Lichtempfänger 10 empfangen und über einen Eingangsverstärker 11 auf einen Eingang 3 eines PLL-IC 12 geleitet. Am Ausgang 6 des PLL-IC 12 steht eine in dem PLL-IC 12 erzeugte Dreiecks-Wechselspannung an, aus der - wie unten noch näher erläutert werden wird - die Lichtimpulse abgeleitet werden. In dem PLL-IC 12 findet ein Vergleich der empfangenen Lichtimpulse mit der am Ausgang 6 anstehenden Wechselspannung statt. Bei einer Übereinstimmung der Signale in Frequenz und Phase steht am Ausgang 8 des PLL-ICs 12 ein "Low"-Signal an, während bei einer fehlenden Übereinstimmung ein "High"-Signal erzeugt wird. Das "High"-Signal schaltet ein Relais 13 durch und läßt eine gelbe Anzeigediode 14 aufleuchten. Die gelbe Anzeigediode 14 ist ein Signal dafür, daß die Lichtschranke einen Gegenstand detektiert hat und einen dementsprechenden Vorgang durch das Relais 13 auslöst.

Die am Ausgang 6 des PLL-ICs 12 stehende Wechselspannung wird in ihrer Frequenz durch die R-C-Beschaltung am Eingang 5 festgelegt. Die Dreieckspannung gelangt auf einen Schwellwertschalter 15, der einen Impulszug mit Rechteckimpulsen formt. Über eine unten näher beschriebene Amplitudenregelstufe 16 wird die Amplitude der Impulse des Rechteck-Impulszuges festgelegt und eine dementsprechende Konstantstromquelle 17 angesteuert, die ihrerseits einen Lichtsender 18 in Form einer Leuchtdiode steuert. Die Leuchtdiode 18 sendet somit Lichtimpulse aus, deren Amplitudenverlauf dem Amplitudenverlauf am Ausgang der Amplitudenregelstufe 16 entspricht.

Der Regelkreis wird über den Empfänger 10 zum PLL-IC 12 geschlossen.

Am Ausgang 1 des PLL-IC 12 steht eine Gleichspannung als Indikationssignal an, deren Wert abhängig von der Amplitude der vom Empfänger 10 empfangenen Lichtimpulse ist. Der Ausgang 1 des PLL-IC 12 ist mit ersten Eingängen eines ersten Komparators 19 und eines zweiten Komparators 20 verbunden. Der andere Eingang des zweiten Komparators 20 ist mit dem Abgriff eines ersten Potentiometers P1 verbunden, an dem eine Gleichspannung + U anliegt. An den Abgriff des ersten Potentiometers P1 ist ferner ein zweites Potentiometer P2 angeschlossen, dessen Abgriff mit dem anderen Eingang des ersten Komparators 19 verbunden ist. Die Komparatoren 19, 20 erzeugen a Ausgang ein "High"-Signal, wenn die an den Abgriffen der Potentiometer P1, P2 abgegebene Spannung die an den ersten Eingängen zugeführte, vom Ausgang 1 des PLL-ICs 12 abgenommene Spannung übersteigt. Da die Ausgangsspannung an der Klemme 1 des PLL-ICs 12 umgekehrt proportional zur Amplitude der empfangenen Lichtimpulse ist, steht zu Beginn der Funktion der Lichtschranke bei korrekter Justierung ein minimales Ausgangssignal an der Klemme 1 des PLL-ICs 12 an. Der zweite Komparator 20 erzeugt daher am Ausgang ein "High"-Signal und schaltet zwei mit ihm verbundene Schaltstufen 21, 22 durch. Durch die durchgeschaltete Schaltstufe 21 ist eine Verbindung von dem Komparator 19 zu einem Kondensator 23 hergestellt, dessen eine Platte mit einer Spannungsquelle + 8 V verbunden ist.

Liegt der Ausgang des ersten Komparators 19 "High", schaltet ein nachgeschalteter Inverter 19' seinen Ausgang "low" und legt die nicht mit der Spannungsquelle verbundene Platte des Kondensators 23 auf Massepotential, so daß sich der Kondensator auflädt. Die Geschwindigkeit der Aufladung wird durch einen mit dem Kondensator 23 in Serie liegenden Widerstand 24 bestimmt. Mit der nicht mit der Spannungsquelle + 8 V verbundenen Platte des Kondensators 23 ist die Amplitudenregelstufe 16 verbunden. Durch das Absinken des Potentials an der nicht mit der Spannungsquelle verbundenen Platte des Kondensators (Aufladen des Kondensators) wird die Amplitude der Impulse am Ausgang der Amplitudenregelstufe 16 verringert. Der Sender 18 sendet somit Lichtimpulse mit einer geringeren Amplitude aus, wodurch der Empfänger 10 naturgemäß Lichtimpulse mit geringerer Amplitude empfängt und ein entsprechendes Signal auf dem PLL-IC 12 leitet. Dadurch vergrößert sich die Spannung am Ausgang 1 des PLL-IC 12 und somit an den Eingängen der Komparatoren 19, 20. Wegen des durch das Potentiometer P2 niedriger eingestellten Schwellwertes schaltet der erste Komparator 19 durch und nimmt am Ausgang ein "Low"-Signal an, so daß der nachgeschaltete Inverter 19′ am Ausgang ein "High"-Signal aufweist. Demzufolge wird der aufgeladene Kondensator wieder entladen, indem die von der Spannungsquelle + 8 V abgewandte Platte ein positiveres Potential annimmt. Durch das positivere Potential wird die Amplitude des Impulszuges am Ausgang der Amplitudenregelstufe 16 wieder erhöht, wodurch die Sendeleistung des Senders 18 ansteigt. Dies führt über den Empfänger 10 zu einem Abfallen der Spannung am Ausgang 1 des PLL-ICs 12, so daß der Komparator 19 wieder durchschaltet und am Ausgang des Inver-ters 19′ wieder ein "Low"-Signal ansteht, wodurch der Kondensator 23 wieder auflädt und eine Reduzierung der Amplitude am Ausgang der Amplitudenregelstufe 16 bewirkt. Auf diese Weise schwankt die Sendeleistung des Senders 18 um den durch das Potentiometer P2 festgelegten Sollwert. Eine Verschmutzung in der Sender-Empfänger-Strecke führt zu einer Absenkung der Amplitude der empfangenen Lichtwellen und damit zu einer Anhebung der Senderleistung, da das Regelkriterium eine gleichbleibende Amplitude am Eingang 3 des PLL-IC 12 ist.

Die vom zweiten Komparator 20 ebenfalls durchgeschaltete Schaltstufe 22 steuert eine grüne Leuchtdiode 25, die anzeigt, daß eine optimale Senderleistung eingestellt ist.

Wird die Strecke zwischen Sender 18 und Empfänger 10 unterbrochen, steigt die Spannung am Ausgang 1 des PLL-IC 12 an, bis der zweite Komparator 20 durchschaltet. Dadurch werden die Schaltstufen 21, 22 geöffnet, so daß die grüne Leuchtdiode 25 erlischt und die Verbindung zwischen Kondensator 23 und dem Ausgang des Komparators 19 bzw. des Inverters 19′ unterbrochen wird. Am Kondensator findet somit weder ein Lade- noch ein Entladevorgang statt. Er kann seine Ladung über viele Stunden hinweg praktisch unverändert behalten, so daß bei einer späteren Freigabe der Strecke zwischen Sender 18 und Empfänger 10 der vorher erreichte Regelwert für die Amplitude sofort wieder zur Verfügung steht.

Mit dem Potentiometer P1 ist es möglich, die "Durchdringung" des Lichtschrankensystems auf den speziellen Fall einzustellen. Für die Regelung von Waschanlagen kann es beispielsweise erforderlich sein, die gewölbte Windschutzscheibe eines Autos zu erkennen, um eine Trocknungsdüse anzuheben und nicht gegen die Windschutzscheibe laufen zu lassen. Eine andere Lichtschranke wird hingegen gegen starkes Sprühwasser unanfällig sein müssen und ein Objekt erst zu identifizieren haben, wenn beispielsweise ein völlig undurchlässiger Reifen in den Strahlengang eintritt. Diese Anforderungen an die Lichtschranke können durch die Einstellung des Potentiometers P1 erfüllt werden.

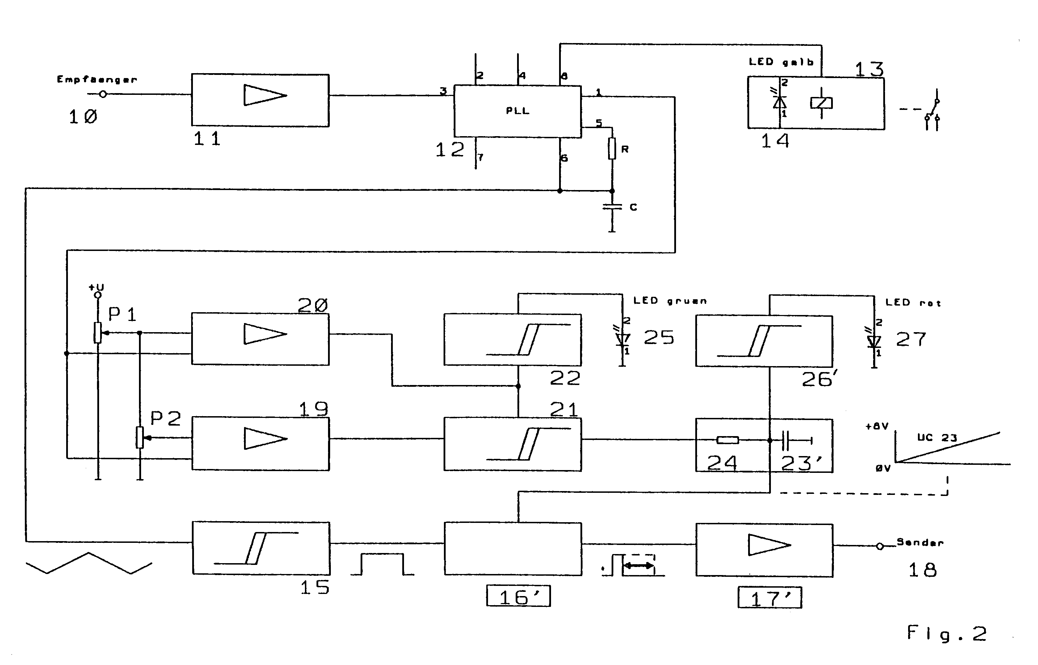

Figur 2 zeigt eine analoge Ausbildung einer Lichtschrankenanordnung, bei der lediglich die Amplitudenregelstufe 16 durch eine Regelstufe 16′ für das Tastverhältnis ersetzt worden ist, die Treiberschaltung 17′ für den Sender 18 einen konstanten, nicht variablen Strom während der Einschaltdauer der Impulse erzeugt und der Kondensator 23′ mit seiner freien Platte an Masse liegt.

Beiden Schaltungen ist gemeinsam, daß die den Signalwert des Kondensators 23 bestimmende, nicht mit der Spannungsquelle + 8 V bzw. mit Masse verbundene Platte mit einem Schwellwertschalter 26 bzw. 26′ verbunden ist, der durchschaltet, wenn das Potential dieser Platte des Kondensators zu groß wird. Durch das Durchschalten des - im Beispiel der Figur 2 invertierenden - Schwellwertschalters 26 leuchtet eine rote Leuchtdiode 27 auf, die anzeigt, daß die Verschmutzung der Sender-Empfänger-Strecke 18, 10 nunmehr zu stark geworden ist oder daß die Anlage in anderer Weise gestört ist.

## Patentansprüche

1. Lichtschranke mit einem optischen Sender (18) zur Aussendung von Lichtimpulsen, einem optischen Empfänger (10) zum Empfang der Lichtimpulse, einer Ansteuerschaltung für den optischen Sender (18) mit einer Einstellvorrichtung für die Ausgangsleistung des optischen Senders (18), einer Erkennungsschaltung (12) für die empfangenen Lichtimpulse mit einem Generator für ein mit der Intensität der empfangenen Lichtimpulse variierendes Indikationssignal und mit einer Anzeige (27) für eine zu geringe empfangene Intensität der Lichtimpulse, gekennzeichnet durch
- einen ersten Komparator (19), der das Indikationssignal mit einem vorgegebenen Sollwert vergleicht und in Abhängigkeit von dem Vergleich einen Schaltvorgang auslöst,
- einen Signalspeicher (23, 23′), dessen Signalwert in Abhängigkeit von dem Schaltvorgang durch den ersten Komparator (19) zunimmt oder abnimmt, wenn der Signalspeicher (23, 23′) mit dem geschalteten Teil in Verbindung steht, und unverändert bleibt, wenn die Verbindung unterbrochen ist,
- einen zweiten Komparator (20), der das Indikationssignal mit einem in Richtung geringerer Intensität der empfangenen Lichtimpulse von dem Sollwert verschiedenen Schwellwert vergleicht und ein Schaltsignal erzeugt,
- eine zwischen Signalspeicher (23, 23′) und dem durch den ersten Komparator (19) geschalteten Teil eingeschaltete Schaltstufe (21), die in Abhängigkeit vom Schaltsignal des zweiten Komparators (20) die Verbindung des Signalspeichers (23, 23′) mit dem geschalteten Teil unterbricht und
- eine an den Signalspeicher (23, 23′) angeschlossene Steuerstufe (16, 16′) zur Einstellung der Sendeleistung des optischen Senders (18) in Abhängigkeit von dem momentanen Signalwert des Signalspeichers (23, 23′).

2. Lichtschranke nach Anspruch 1, dadurch gekennzeichnet, daß die Steuerstufe (16) die Amplitude der Lichtimpulse in Abhängigkeit von dem Signalwert des Signalspeichers (23, 23′) verändert.

3. Lichtschranke nach Anspruch 1, dadurch gekennzeichnet, daß die Steuerstufe (16') das Tastverhältnis der Lichtimpulse in Abhängigkeit von dem Signalwert des Signalspeichers (23, 23′) verändert.

4. Lichtschranke nach einem der Ansprüche 1 bis 3, dadurch gekennzeichnet, daß der Signalspeicher ein Kondensator (23, 23′) ist, der von dem durch den ersten Komparator (19) ausgelösten Schaltvorgang auf- und entladbar ist.

5. Lichtschranke nach Anspruch 4, dadurch gekennzeichnet, daß der erste Komparator (19) die nicht mit einer Spannungsquelle (+ 8 V, Masse) verbundene Platte des Kondensators (23, 23′) durch den Schaltvorgang auf Masse oder auf das Potential der Spannungsquelle (+ 8 V, Masse) liegt.

6. Lichtschranke nach einem der Ansprüche 1 bis 5, dadurch gekennzeichnet, daß die Schaltschwellen der beiden Komparatoren durch Potentiometer (P1, P2) einstellbar sind.

7. Lichtschranke nach Anspruch 6, dadurch gekennzeichnet, daß an den mit dem zweiten Komparator (20) verbundenen Abgriff des ersten Potentiometers das zweite Potentiometer (P2) angeschlossen ist, dessen Abgriff mit dem ersten Komparator (19) verbunden ist.

8. Lichtschranke nach Anspruch 7, dadurch gekennzeichnet, daß eine Referenzspannung über die Potentiometer (P1, P2) auf die Komparatoren (19, 20) gelangt.

## Claims

1. Light barrier comprising an optical transmitter (18) for sending light pulses, an optical receiver (10) for receiving light pulses, a driving circuit for the optical transmitter (18) with a setting means for the output of the optical transmitter (18), a recognition circuit (12) for the received light pulses including a generator for an indicating signal which varies according to the intensity of the received light pulses and a display (27) for a received insufficient intensity of the light pulses, characterised by
- a first comparator (19) which compares the indicating signal with a preset required value and triggers a switching operation as a function of the comparison,
- a signal store (23, 23') the signal of which increases or decreases as a function of the switching operation by the first comparator, when the signal store (23, 23') is connected with the switched part, and remains unchanged, when the connection is interrupted,
- a second comparator (20) which compares the indicating signal with a threshold value different from the required value in direction of reduced intensity of the received light pulses and generates a switching signal,
- a switching stage (21) connected between the signal store (23, 23') and the part switched by the first comparator (19), said switching stage interrupting the connection between the signal store (23, 23') and the switched part as a function of the switching signal of the second comparator (20), and
- a control stage (16, 16') connected with the signal store (23, 23') for setting the transmitting power of the optical transmitter (18) as a function of the transient signal value of the signal store (23, 23').

2. Light barrier according to claim 1, characterised in that the control stage (16) varies the amplitude of the light pulses as a function of the signal value of the signal store (23, 23').

3. Light barrier according to claim 1, characterised in that the control stage (16') varies the pulse-duty factor of the light pulses as a function of the signal value of the signal store (23, 23').

4. Light barrier according to one of claims 1 to 3, characterised in that the signal store is a capacitor (23, 23'), which can be charged or dumped by the switching operation triggered by the first comparator (19).

5. Light barrier according to claim 4, characterised in that the first comparator (19) connects the plate not connected with a voltage source (+ 8V, ground) of the capacitor (23, 23') to ground or to the potential of the voltage source (+8V, ground) by means of the switching operation.

6. Light barrier according to one of claims 1 to 5, characterised in that the switching values of the two comparators are adjustable by means of potentiometers (P1, P2).

7. Light barrier according to claim 6, characterised in that the second potentiometer (P2), whose tap is connected with the first comparator (19), is attached to the tap of the first potentiometer connected with the second comparator (20).

8. Light barrier according to claim 7, characterised in that a reference voltage is passed to the comparators (19, 20) via the potentiometers (P1, P2).

## Revendications

1. Barrière photo-électrique comprenant un émetteur optique (18) pour émettre des impulsions lumineuses, un récepteur optique (10) pour recevoir les impulsions lumineuses, un circuit de pilotage pour l'émetteur optique (18) avec un dispositif de réglage pour la puissance de sortie de l'émetteur optique (18), un circuit de reconnaissance (12) pour les impulsions lumineuses reçues avec un générateur pour un signal indicateur variant avec l'intensité des impulsions lumineuses reçues, et une signalisation (27) pour le cas où l'intensité des impulsions lumineuses reçue est trop faible, caractérisée par
- un premier comparateur (19) qui compare le signal indicateur avec une consigne préétablie et déclenche un processus de commutation en fonction de la comparaison,
- une mémoire de signal (23, 23') dont la valeur de signal augmente ou diminue en fonction du processus de commutation par le premier comparateur (19) lorsque la mémoire de signal (23, 23') est en liaison avec la partie commutée, et demeure invariable lorsque la liaison est interrompue,
- un deuxième comparateur (20) qui compare le signal indicateur avec une valeur de seuil qui diffère de la valeur de consigne en direction d'une plus faible intensité des impulsions lumineuses reçue, et produit un signal de commutation,
- un étage de commutation (21) qui est monté entre la mémoire de signal (23, 23') et la partie commutée par le premier comparateur (19), et qui en fonction du signal de commutation du deuxième comparateur (20) interrompt la liaison de la mémoire de signal (23, 23') avec la partie commutée, et
- un étage de pilotage (16, 16') raccordé à la mémoire de signal (23, 23') pour régler la puissance d'émission de l'émetteur optique (18) en fonction de la valeur de signal instantanée de la mémoire de signal (23, 23').

2. Barrière photo-électrique selon la revendication 1, caractérisée en ce que l'étage de pilotage (16) fait varier l'amplitude des impulsions lumineuses en fonction de la valeur de signal de la mémoire de signal (23, 23').

3. Barrière photo-électrique selon la revendication 1, caractérisée en ce que l'étage de pilotage (16) fait varier le rapport d'échantillonnage des impulsions lumineuses en fonction de la valeur de signal de la mémoire de signal (23, 23').

4. Barrière photo-électrique selon l'une des revendications 1 à 3, caractérisée en ce que la mémoire de signal est un condensateur (23, 23') qui peut être chargé et déchargé par le processus de commutation déclenché par le comparateur (19).

5. Barrière photo-électrique selon la revendication 4, caractérisée en ce que par le processus de commutation le premier comparateur (19) met à la masse ou au potentiel d'une source de tension (+8V, masse) l'électrode du condensateur (23, 23') qui n'est pas reliée à la source de tension (+8V, masse).

6. Barrière photo-électrique selon l'une des revendications 1 à 5, caractérisée en ce que les seuils de commutation des deux comparateurs sont réglables par potentiomètre (P1, P2).

7. Barrière photo-électrique selon la revendication 6, caractérisée en ce qu'à la prise du premier potentiomètre reliée au deuxième comparateur (20) est raccordé le deuxième potentiomètre (P2), dont la prise est reliée avec le premier comparateur (19).

8. Barrière photo-électrique selon la revendication 7, caractérisée en ce qu'une tension de référence parvient aux comparateurs (19, 20) par l'intermédiaire des potentiomètres (P1, P2).
